# EUROPÄISCHE PATENTSCHRIFT

(11) **EP 3 214 716 B1**
(45) Veröffentlichungstag und Bekanntmachung des Hinweises auf die Patenterteilung: **23.02.2022**
(21) Anmeldenummer: 17158949.2
(22) Anmeldetag: 02.03.2017
(51) Int. Cl.: H02J 3/14, H02J 13/00

(54) **NOTFALLBETRIEB IN EINEM STROMNETZ**
EMERGENCY SERVICE IN A GRID
SERVICE D'URGENCE DANS UN RÉSEAU

(30) Priorität: 04.03.2016 DE 102016103978
(43) Veröffentlichungstag der Anmeldung: 06.09.2017
(73) Patentinhaber: Deutsche Telekom AG, 53113 Bonn (DE)
(72) Erfinder: Huber, Michael, 67434 Neustadt a. d. W. (DE); Bohlander, Rolf, 67245 Lambsheim (DE)
(74) Vertreter: Braun-Dullaeus Pannen Emmerling Patent- & Rechtsanwaltspartnerschaft mbB

(56) Entgegenhaltungen:
- EP-A2- 2 647 756
- WO-A2-2010/132469
- US-A1- 2007 299 562
- US-A1- 2010 321 574
- US-A1- 2011 264 932

## Beschreibung

Die Erfindung betrifft ein Verfahren und ein System zur notfallmäßigen Lastkontrolle, also zur Lastkontrolle in einem Notfall, in einem von einem Energieversorger versorgten Stromnetz, über das Kleinverbraucher, wie private Haushalte und kleine industrielle Abnehmer, mit Strom versorgt werden, wobei den Kleinverbrauchern an das Stromnetz angeschlossene elektrische Geräte oder Gerätegruppen zugeordnet sind, deren Betrieb über ein Datenleitungsnetz ansteuerbar ist.

Verfahren zum Betrieb von Stromnetzen in Notfällen, insbesondere bei einer kurzzeitigen Spannungsabsenkung ("Brownout") infolge einer Überlastung wegen unvorhergesehener Ereignisse, sind an sich bekannt. Solche Brownouts können beispielsweise bei starken Frequenzschwankungen auftreten und Zeichen eines in Kürze bevorstehenden Totalausfalls des Netzes ("Blackout") sein.

In Stromnetzen stabilisieren die großen rotierenden Massen der Generatoren die Wechselstromfrequenz, die in Deutschland 50Hz beträgt. Wenn mehr Strom verbraucht als erzeugt wird, drehen sich die Generatoren langsamer und die Netzfrequenz sinkt. Im umgekehrten Fall steigt die Netzfrequenz. Ab einer gewissen Frequenzabweichung von etwa 2Hz schalten sich die Kraftwerke automatisch ab, um Schäden zu vermeiden.

Mit der Energiewende hat der Anteil der "erneuerbaren" Energien an dem Strommix zugenommen, so dass immer weniger Energie durch die rotierenden Massen der Generatoren erzeugt wird und immer mehr Energie durch elektronisch geregelten Wechselstrom in das Netz eingespeist wird. Mit dieser Veränderung wurde das Stromnetz empfindlicher gegenüber Schwankungen. Einem Brownout wird bislang durch einen automatischen Lastabwurf, bei dem komplette Netzbereiche, beispielsweise ganze Stadtviertel, temporär abgeschaltet werden, begegnet, zumindest dann, wenn sich die Netzfrequenz nicht mit den vorhandenen Regelmechanismen oder durch weitere Reservekraftwerke kurzfristig stabilisiert lässt. Durch einen solchen automatischen Lastabwurf ganzer Stadtviertel sind allerdings auch kritische Infrastrukturen, wie z.B. Krankenhäuser, das öffentliche Verkehrsnetz, Kommunikationsnetze, Sicherheitssysteme, kleinere Industrieanlagen, Aufzüge und Computeranlagen von der Stromversorgung abgeschnitten, da ein "bisschen" Abschalten eines Stadtviertels, eines Stadtnetzes oder größeren Netzstrukturen mit den heutigen Brownout-Mechanismen nicht funktioniert.

Aus der US 2013/0096726 ist die Vermittlung von Verbraucherlasten durch die Vorgabe von Einschalt- und Abschaltzeiten von Geräten beschrieben. Durch das dort beschriebene Verfahren wird die Wahrscheinlichkeit eines Brownout reduziert, indem der Stromversorger durch Vorgabe von Zeitfenstern, in denen Geräte an- und abgeschaltet werden, die Verbraucherlast verschiebt; Notfallmaßnahmen zur Behebung eines Brownouts beschreibt das Dokument jedoch nicht. Wegen der empfindlicher werdenden Stromnetze kommt solchen Notfallmechanismen jedoch eine immer größere Bedeutung zu, um die Kraftwerks- und Netzinfrastruktur zu schützen.

Aus der US 2007/0299562 A1 und der WO 2010/132469 A2 ist es bekannt, dass ein Netzbetreiber einzelne elektrische Geräte, insbesondere Haushaltsgeräte, durch eine gezielte Unterbrechung der Stromversorgung vom Netz nehmen und damit das Netz entlasten kann.

Aus der EP 2 647 756 A2 sind in diesem Zusammenhang ein System und ein Verfahren zum Steuern eines Geräts in Bezug auf den Energieverbrauch des Geräts bekannt, bei dem ein Signal empfangen wird, das sich auf die vom Gerät verbrauchte Energie bezieht, und eine Bestimmung, ob ein vom Gerät durchgeführter Betriebszyklus fortgesetzt oder unterbrochen werden soll, dies basierend zumindest teilweise auf dem Empfang des Signals.

Aus der US2010/321574 A1 sind in diesem Zusammenhang ein Verfahren und ein System zum Steuern des Stromverbrauchs mit einer Leistungssteuerungsanzeigevorrichtung bekannt. Einige Aspekte beziehen sich auf ein Leistungssteuerungs-Anzeigegerät, das Stromkosten-Daten und Benutzerpräferenzen empfängt und einen Stromverbrauchsplan generiert, der interne Anzeigekomponenten sowie angeschlossene Stromverbrauchsgeräte steuern kann. Einige Aspekte beziehen sich auf Methoden und Systeme zum automatischen Kompensieren eines angezeigten Bildes, wenn die Hintergrundbeleuchtung des Displays aufgrund der Leistungsregelung geändert wird.

Aufgabe der Erfindung ist es nunmehr, ein Verfahren respektive ein System zur Lastkontrolle in Notfällen zu schaffen, das sich einfach und mit kostengünstigen Mitteln umsetzen lässt und das die Gefahr des Auftretens eines Brownouts minimiert und gegebenenfalls die Behebung eines Brownouts durch gezielten und geräteschonenden Lastabwurf ermöglicht, wobei kritische Infrastrukturen verschont bleiben.

Diese Aufgaben werden durch das Verfahren nach Anspruch 1-3 und das System nach Anspruch 4-8 gelöst. Bevorzugte Ausgestaltungen ergeben sich aus den jeweiligen Unteransprüchen.

Entsprechend der Ansprüche liegt die grundlegende Idee der erfindungsgemäßen Lösung darin, in einem vom Brownout betroffenen Stromnetz nicht ganze Netzbereiche, wie Stadtviertel, abzuschalten, sondern nur einzelne stromintensive Verbraucher ("Stromfresser ") oder kleine fest definierte Gruppen von Verbrauchern in den Haushalten gezielt und temporär außer Betrieb zu nehmen. Schließlich kann mit einem solchen gezielten Lastabwurf, der ausschließlich besonders stromintensive Verbraucher betrifft, eine erhebliche Lastreduzierung erzielt werden, die zur Vermeidung eines Brownouts ausreicht. Erfindungswesentlich ist, dass der Energieversorger im Notfall temporär die absolute Schalthoheit über die "Stromfresser" hat, während die Nutzer der Geräte respektive die Kunden die Abschaltung hinnehmen müssen. Dabei handelt es sich bei den für das Verfahren zur Verfügung stehenden Geräten vorteilhafterweise um solche, deren Abschalten zwar für den Nutzer unangenehm ist, aber keinesfalls zu einer lebensbedrohlichen Situation führt respektive Schäden verursachen.

Zur Umsetzung des Verfahrens steht dem Energieversorger jeweils eine Datenleitung zu einzelnen Stromfressern oder kleinen Gruppen solcher Geräte zur Verfügung, über die er im einfachsten Falle einen Abschaltbefehl an das jeweilige Gerät respektive die Gruppe senden kann, wenn er feststellt, dass sein Netz in einen kritischen Zustand ("Brownout") gerät oder schon geraten ist. Einen solchen Brownout kann er aus Beobachtungen der ihm zur Verfügung stehenden Netzparameter, wie Auslastung und/oder Netzfrequenz, erkennen. Die einzelnen Geräte(gruppen) können in einer Liste - zusammen mit ihrem Stromverbrauch - aufgeführt sein, anhand derer der Energieversorger eine Auswahl trifft. Vorteilhafterweise liegen dem Energieversorger auch Informationen über das tatsächliche aktuelle Lastverhalten der einzelnen elektrischen Geräte(gruppen) vor, so dass er sich bei der Auswahl der abzuwerfenden Geräte daran orientieren kann. Auf diese Weise kann er die Größe der abzuwerfenden Last genau "dosieren".

Die elektrischen Geräte oder Gerätegruppen sind somit über Datenleitungen mit dem Energieversorger verbunden, so dass dieser den Betrieb einzelner elektrischer Geräte oder Gerätegruppen bei Vorliegen einer kritischen Netzbelastung über einen unmittelbaren Zugriff auf das Datenleitungsnetz und damit auf das Gerät oder die Gerätegruppe unterbrechen kann. Dazu ist in den "Stromfressern" vorteilhafterweise ein spezielles Steuermodul in der Art eines fernsteuerbaren Netzschalters fest verbaut, das vom Energieversorger über das Datenleitungsnetz angesprochen wird und ein sofortiges Abschalten des Gerätes ermöglicht.

Dabei kann das Datenleitungsnetz aus verschiedenen Komponenten, wie einem lokalen Datenleitungsnetz und dem Internet, zusammengesetzt sein, das auch Nah- und/oder Fernbereich Funkstandards umfasst. Zur Datenleitung kann auch das Stromnetz selber mitverwendet werden. Der Energieversorger hat über dieses Datenleitungsnetz Zugriff auf die jeweiligen speziellen Steuermodule.

Dabei sei angemerkt, dass der erfindungsgemäße "Energieversorger" nicht zwangsläufig das Energieunternehmen oder/oder der Netzbetreiber selber sein muss. Es können auch verbundene Unternehmen sein, die reine organisatorische und/oder administrative Aufgaben bei der Stromversorgung übernehmen.

Vorteilhafterweise wird das erfindungsgemäße Verfahren mittels einer sogenannten Maschine to Maschine ("M2M") Lösung umgesetzt, wobei die Geräte(gruppen) eines Haushalts oder eines Gebäudes auch untereinander über die Steuermodule verbunden sind und miteinander beispielsweise über einen sicheren Hausfunk kommunizieren können. Die Steuermodule können jeweils Schaltaktoren und Funkmodule umfassen und nach dem Master/Slave Prinzip mit einem oder mehreren "Mastergeräten" kommunizieren. Das Mastergerät, das als "Home-Base" selber die Funktion eines speziellen Steuermoduls haben kann, kommuniziert letztendlich mit dem Energieversorger, beispielsweise über ein Mobilfunknetz. Dazu weist der Master ein Steuermodul ("M2M Brownout-Modul") auf, das über ein externes Netz die Kommunikation mit dem Energieversorger ermöglicht. Somit kann der Energieversorger im "Brownout-Fall" das elektrische Gerät mit Steuerbefehlen über "M2M" ansprechen. Das Mastergerät kann auch als separates Gerät zentral für einen Haushalt oder eine Gebäude ausgebildet sein und einerseits mit dem Energieversorger und andererseits mit den angeschlossenen elektrischen Geräten kommunizieren.

In einer vorteilhaften Ausführungsform kommunizieren die einzelnen, stromintensiven Geräte auch untereinander und bilden einen eigenen Netzverbund im Rahmen eines vermaschten Netzes aus. Mit einem solchen vermaschten Netz können eine Vielzahl stromintensiver Geräten, die weit voneinander entfernt sind, untereinander kommunizieren. Eine Kommunikation in einem solchen "Mesh"-Verbund hat den Vorteil, dass eine begrenzte Reichweite eines Nahfunkstandards, wie z.B. WLAN bzw. sicherer Hausfunk, ausreicht, um alle Geräte zu erreichen, da die Nachrichten von einem näheren positioniertem Gerät zum weiterentfernten Gerät weitergereicht werden können.

Um einen unerlaubten Fremdzugriff zu verhindern, ist es generell vorteilhaft, die Kommunikation über Funk mit probaten Mechanismen zu verschlüsseln. Die Geräte werden dann ab Werk mit einer günstigen Funktechnik ausstatten und steuern den Rest der Geräte entsprechend verschlüsselt an.

Im "Brownout-Notfall" sendet dann der Netzbetreiber gezielt seine entsprechenden Nachrichten an den/die Master, die mit "M2M-Brownout-Modulen" ausgestattet sind. Der Master reicht den "Abschaltbefehl" an die anderen Geräte über den "Mesh"-Verbund weiter. Alle solchermaßen angesprochen Geräte werden dann vom Netz genommen, wobei der Kunde keine Möglichkeit hat, diesen Prozess zu unterbinden.

Der Einsatz der speziellen Steuermodule kann gesetzlich vorgeschrieben werden, um Hersteller von "Stromfressern" an dem Verfahren zu beteiligen. Mit einer solchermaßen preiswerten und sicheren Lösung könnte innerhalb der Bevölkerung eine Akzeptanz für den mit der Erfindung einhergehenden Kontrollverlust erzeugt werden.

Dabei ist es vorteilhaft, wenn das Abschalten der elektrischen Geräte nicht einfach durch Unterbrechung der Netzspannung erfolgt, sondern die meist mit komplizierter Steuerelektronik ausgestatteten Geräte regulär "heruntergefahren" werden. Dazu ist es notwendig, dass bei den Geräten eine entsprechende Notabschaltung vorgesehen ist, die das Gerät möglichst schnell vom Netz nimmt und sich über das Steuermodul respektive dem "M2M-Brownout-Modul" auslösen lässt. Die erfindungsgemäße Unterbrechung des Betriebes wird dementsprechend durch ein vom Netzbetreiber ausgelöstes Herunterfahren realisiert. Mit diesen Steuermodulen lässt sich vorteilhafterweise auch ein Anschalten im Sinne eines Hochfahrens auf Befehl des Netzbetreibers realisieren. Während des Notabschalts hat der Nutzer keine Möglichkeit der Wiederinbetriebnahme des Gerätes. Der erfindungsgemäße Notabschalt gilt entsprechend als priorisiert gegenüber der Bedienung durch den Nutzer.

Vorteilhafterweise gibt das "M2M-Brownout-Modul" eine Rückmeldung an den Energieversorger, um welche Verbrauchs- bzw. Geräteklasse es sich handelt und ob ein Gerät in Betrieb war oder nicht.

Um den Nutzer zu beruhigen ist es vorteilhaft, wenn an den betroffenen Geräten eine Text-Anzeige vorgesehen ist, die den Nutzer darüber informiert, dass das Gerät, aufgrund der Netzauslastung eine voraussichtliche Pause von einigen Minuten einlegt. Ein bisher nicht angeschaltetes Gerät kann während einer solchen "Brownout-Zeit" nicht benutzt werden. Allerdings soll der Benutzer anhand der Textanzeige im Gerät die voraussichtliche Ausfallzeit erkennen können.

Die erfindungsgemäße Lösung stellt damit einen "Notfallmechanismus" dar, der mit preisgünstigen elektronischen Bauteilen realisiert werden kann, die lediglich zu einer "Minimalkommunikation" fähig sein brauchen. Die Masterfunktion ("M2M-Brownout-Modul") wird vorteilhafterweise in zwei für Haushalte typischen und vergleichsweise teuren "Stromfressern", wie der Waschmaschine und dem E-Backofen installiert. Bei diesen Stromfressern fällt das vergleichweise teure "M2M-Brownout-Modul" kaum ins Gewicht. Die restlichen Stromfresser sind mit vergleichsweise kostengünstigen reinen Steuermodulen ausgestattet. Da das "M2M-Brownout-Modul" bzw. Steuermodul in den Stromfressern bereits vom Hersteller fest verbaut sind, wird über den Neukauf dieser Geräten ein gewissermaßen schleichender Rollout stattfinden. Zukünftig könnten alle Haushaltsgeräte ab einer gewissen Energieklasse mit solchen Modulen ausgestattet werden.

Dieses granulare, gezielte Abschalten einzelner Verbraucher seitens des Netzbetreibers im "Brownout Fall" hat den Vorteil, dass die oben genannten kritischen Infrastrukturen weiterhin am Netz verbleiben können und entsprechend funktionieren. Letztendlich sind damit weniger Verbraucher/Haushalte von den gezielten Ausfällen beim Brownout betroffen. In den kritischen Infrastrukturen (z.B. Krankenhäuser) werden teure Notstromversorgungen überflüssig oder können geringer dimensioniert werden. Darüber hinaus verlieren die Netzbetreiber weniger Einnahmen.

Eine besondere Ausführungsvariante des Verfahrens implementiert dezentrale Eigenenergieerzeuger. Das sind Haushalte, die große Teile Ihrer Energie selbst erzeugen, speichern und verwalten: Die entsprechenden Energiespeicher werden mit einem Schaltmodul oder zusätzlich mit einem "M2M-Brownout-Modul" ausgestattet, das bei Empfang eines Schaltbefehles des Stromversorgers den Energiespeicher nicht abschaltet, sondern, da es sich um einen Energielieferanten handelt, diesen zwingt, die gespeicherte Energie an den Stromversorger abzugeben. Hierbei werden anhand der eingebauten Steuerung der Speicher die Entladeparameter auf Einhaltung überwacht, so dass diese keinerlei Beschädigung erfahren (keine Tiefenentladung), sondern ein ganz normaler Entladezyklus stattfindet.

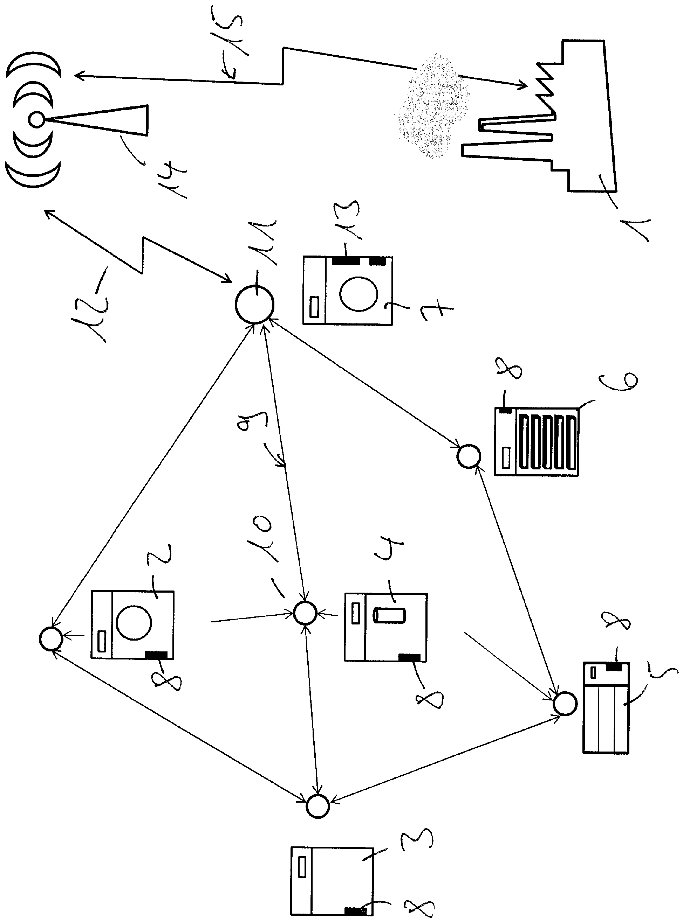

Die Erfindung wird nachfolgend anhand der Figur näher beschrieben.

Die Figur zeigt als Kleinverbraucher einen Haushalt mit verschiedenen elektrischen Geräten, die allesamt unter die Kategorie "Stromfresser" fallen. Die elektrischen Geräte werden alle über ein nicht dargestelltes Stromnetz von einem Energieversorger 1 mit Strom versorgt. Der Energieversorger steht über ein Kommnuikationsmetz 15 mit einem Mobilfunkbetreiber 14 in Verbindung.

Keines von den Geräten ist lebensnotwendig oder verursacht bei Abschaltung Schäden, so dass es eine hinnehmbare Belastung für den Nutzer ist, wenn die Geräte auf Befehl des Energieversorgers 1 vorübergehend abgeschaltet werden. Zu den Geräten gehören zunächst ein Wäschetrockner 2, ein Geschirrspüler 3, eine Wärmepumpe 4, ein Dampfgarer 5 und einen Energiespeicher 6. Diese Geräte bilden "Slaves" in einem vermaschten lokalen Hausnetzwerk, in dem einzelne Geräte mit mehreren anderen Geräten kommunizieren können. Ein weiteres Gerät, hier eine Waschmaschine 7, nimmt in diesem Netzwerk die Funktion eines "Masters" an.

Alle Geräte sind mit einem bordeigenen Steuermodul 8 ausgestattet, das eine Sende-Empfangseinheit für einen Nahfunkstandard wie z.B. WLAN aufweist. Zudem realisiert jedes Steuermodul 8 eine Ab- und Anschaltfunktionalität, mit der das jeweilige Gerät durch Abschalten oder Herunterfahren vom Netz genommen und auch wieder Angeschaltet oder Hochgefahren werden kann. Der Energiespeicher 6 kann über einen Schaltbefehl gezwungen werden, seine gespeicherte Energie in das Stromnetz einzuspeisen.

Die Steuermodule 8 und damit die einzelnen Geräte kommunizieren über ein hausinternes Nahfunknetz, von dem einzelne Funkstrecken 9 durch Doppelpfeile gezeigt sind. Die Funkausleuchtung wird in diesem Haushalt durch einen Netzverbund der stromintensiven Geräte in Form eines vermaschten Netzes gebildet, bei dem die Geräte Knoten (durch Kreise 10 gekennzeichnet) bilden. Über dieses Netz können die Geräte untereinander kommunizieren. Ein Ansprechen in einem Mesh-Verbund birgt den Vorteil, dass eine begrenzte Reichweite der Funktechnik überwunden werden kann, in dem die Nachrichten von einem näheren positioniertem Gerät - letztendlich zum weiterentfernten Gerät weitergereicht werden. In diesem Netz bildet die Waschmaschine 7 einen zentralen Master mit einem Steuermodul, das als "M2M-Brownout-Modul" 13 ausgestattet ist. Der Master 11 wird von dem Netzbetreiber über eine Mobilfunkstrecke 12 angesprochen wird. Ein bei dem Master 11 eingehender Abschaltbefehl wird über das vermaschte Netz an den adressierten Empfänger der Befehls weitergeleitet.

Über den Master kann eine definierte Dauer für das Ausschalten (z.B. 5 Minuten) vorgegeben werden. Nach der vorgegebenen Zeit springt der Stromfresser automatisch wieder an. Sollte der Brownout-Fall nach der vom Master definierten Zeit vom Stromversorger noch anstehen, so sendet der Master einen neuen temporären Ausschaltebefehl über den Mesh-Verbund und die erreichten Stromfresser bleiben aus. Dieser Vorgang kann n-fach wiederholt werden, bis der Brownout-Fall im Netz nicht mehr ansteht.

Die Stromfresser melden dem Master auch die Stromverbrauchsklasse ("Wer bin ich") und den Betriebszustand zum Zeitpunkt des Ausschaltebefehls.

## Patentansprüche

1. Verfahren zur notfallmäßigen Lastkontrolle in einem von einem Energieversorger (1) versorgten Stromnetz, über das Kleinverbraucher, wie private Haushalte und kleine industrielle Abnehmer, mit Strom versorgt werden, wobei den Kleinverbrauchern an das Stromnetz angeschlossene elektrische Geräte oder Gerätegruppen zugeordnet sind, deren Betrieb über ein Datenleitungsnetz (9) ansteuerbar ist, **dadurch gekennzeichnet,**
**dass** der Energieversorger (1) bei Vorliegen eines kritischen Netzzustandes den Betrieb einzelner elektrischer Geräte oder Gerätegruppen über einen unmittelbaren Zugriff auf das Datenleitungsnetz (9) unterbricht, indem er über die Datenleitung einen Abschaltbefehl an das Gerät oder die Gerätegruppe sendet und
**dass** in den elektrischen Geräten ein spezielles Steuermodul (8) verbaut wird, das vom Energieversorger über das Datenleitungsnetz angesprochen wird und ein Herunterfahren des Gerätes bewirkt, dass dem Energieversorger (1) Informationen über den aktuellen Lastzustand der einzelnen elektrischen Geräte oder Gerätegruppen vorliegen und er den Betrieb einzelner Geräte nur insoweit unterbricht, als es für die Behebung des kritischen Netzzustandes erforderlich ist.

2. Verfahren nach einem der vorherigen Ansprüche,
**dadurch gekennzeichnet,**
**dass** dem Nutzer der elektrischen Geräte keine Möglichkeit gegeben ist, die Unterbrechung des Betriebes durch den Energieversorger zu unterbinden.

3. Verfahren nach einem der vorherigen Ansprüche,
**dadurch gekennzeichnet,**
**dass** im Brownout-Fall dezentrale Energielieferanten über einen Steuerbefehl vom Energieversorger gezwungen werden, ihre gespeicherte Energie in das Stromnetz einzuspeisen.

4. System zur Durchführung des Verfahrens nach einem der vorherigen Ansprüche aufweisend einen Energieversorger (1), der über ein Stromnetz Kleinverbraucher, wie private Haushalte und kleine industrielle Abnehmer, mit Strom versorgt, wobei den Kleinverbrauchern an das Stromnetz angeschlossene elektrische Geräte oder Gerätegruppen zugeordnet sind, deren Betrieb über ein Datenleitungsnetz (9,12) ansteuerbar ist, **dadurch gekennzeichnet,**
**dass** den elektrischen Geräten oder den Gerätegruppen jeweils Steuermodule (8,13) zugeordnet sind, die mit einer Abschaltfunktionalität eine Unterbrechung des Betriebs des jeweiligen Gerätes hervorrufen, wobei der Energieversorger (1) über das Datenleitungsnetz (9,12) unmittelbaren Zugriff auf die Abschaltfunktionalität der Steuermodule (8,13) hat und bei Vorliegen eines kritischen Netzzustandes einen Abschaltbefehl über die Datenleitung an das Gerät oder die Gerätegruppe sendet,
**dass** die Steuermodule (8,13) eingerichtet sind um ein Herunterfahren des Gerätes zu bewirken,
**dass** der Energieversorger (1) eingerichtet ist, dass ihm Informationen über den aktuellen Lastzustand der einzelnen elektrischen Geräte oder Gerätegruppen vorliegen und
**dass** der Energieversorger (1) eingerichtet ist den Betrieb einzelner Geräte nur insoweit zu unterbrechen, als es für die Behebung des kritischen Netzzustandes erforderlich ist.

5. System nach Anspruch 4,
**dadurch gekennzeichnet,**
**dass** die elektrischen Geräte eines Kleinverbrauchers untereinander in einem vermaschten Netz (9) datenleitend verbunden sind.

6. System nach Anspruch 4 oder 5,
**dadurch gekennzeichnet,**
**dass** ein elektrisches Gerät innerhalb des vermaschten Netzes (9) einen Master (11) ausbildet, der mit dem Energieversorger (1) unmittelbar kommuniziert.

7. System nach einem der Ansprüche 4 bis 6,
**gekennzeichnet durch**
einen dezentralen Speicher (6), der auf einen unmittelbar adressierten Steuerbefehl des Energieversorgers (1) seine gespeicherte Energie in das Stromnetz abgibt.

8. System nach einem der Ansprüche 4 bis 7,
**dadurch gekennzeichnet,**
**dass** an den Geräten eine Text-Anzeige vorgesehen ist, die den Nutzer über die voraussichtliche Länge der Netzabschaltung informiert.

## Claims

1. A method for performing emergency load control in a grid supplied by an energy provider (1) through which small-scale consumers such as private households and small industrial customers are supplied with electricity, wherein electrical devices or device groups which are connected to the grid and whose operation can be actuated via a data-line network (9) are assigned to the small small-scale consumers, **characterized in that**
when a critical grid state exists the energy provider (1) interrupts the operation of individual electrical devices or device groups through direct access to the data-line network (9) by sending a switch-off command to the device or device group across the data-line network, and
that a special control module (8) is built into the electrical devices and is actuated by the energy provider via the data-line network, causing the device to be powered down, that the energy provider (1) possesses information about the current load status of the individual electric devices or device groups and the energy provider only interrupts the operation of individual devices to the extent necessary in order to remedy the critical grid state.

2. The method according to one of the preceding claims, **characterized in that**
the user of the electrical devices does not have the capability to prevent the interruption of operation by the energy provider.

3. The method according to one of the preceding claims, **characterized in that**
in the event of a brownout, remote energy suppliers are obliged to feed their stored energy into the grid through a control command from the energy provider.

4. A system for performing a method according to any one of the preceding claims, including an energy provider (1) which supplies small-scale consumers such as private households and small industrial customers with electricity a grid, wherein electrical devices or device groups which are connected to the grid and whose operation can be actuated via a data-line network (9, 12) are assigned to the small small-scale consumers, **characterized in that**
control modules (8, 13) are assigned to each of the electrical devices or device groups and bring about an interruption of the operation of the respective device by means of a switch-off functionality, wherein the energy provider (1) has direct access to the switch-off functionality of the control modules (8, 13) via the data-line network (9, 12), and sends a switch-off command to the device or device group across the data-line network when a critical grid state exists,
the control modules (8, 13) are configured to cause the device to power down,
the energy provider (1) is set up such that it possesses information about the current load status of the individual electrical devices or device groups, and the energy provider (1) is configured to only interrupt the operation of individual devices to the extent necessary in order to remedy the critical grid state.

5. The system according to Claim 4,
**characterized in that**
the electrical devices of a small-scale consumer are interconnected in a meshed network (9) in such manner as to be able to transmit data.

6. The system according to Claim 4 or 5, **characterized in that**
one electrical device within the meshed network (9) functions as a master (11) and communicates directly with the energy provider (1).

7. The system according to any one of Claims 4 to 6, **characterized by**
a remote storage facility (6), which injects its stored energy into the grid upon receipt of a directly addressed control command from the energy provider (1).

8. The system according to any one of Claims 4 to 7, **characterized in that**
a text display is provided on the devices, which display informs the user about the anticipated duration of the grid switch-off.

## Revendications

1. Procédé de régulation de charge d'urgence dans un réseau électrique alimenté par un fournisseur d'énergie (1), via lequel les petits consommateurs, tels que les ménages privés et les petits consommateurs industriels, sont alimentés en électricité, dans lequel les petits consommateurs se voient attribuer des appareils électriques ou des groupes d'appareils connectés au réseau électrique, dont le fonctionnement peut être commandé via un réseau de lignes de données (9),
**caractérisé en ce que**
le fournisseur d'énergie (1) interrompt le fonctionnement d'appareils électriques individuels ou de groupes d'appareils via un accès direct au réseau de lignes de données (9), en envoyant via la ligne de données une commande de coupure de courant à l'appareil ou au groupe d'appareils et
qu'un module de commande spécial (8) est installé dans les appareils électriques, qui est adressé par le fournisseur d'énergie via le réseau de lignes de données et provoque l'arrêt de l'appareil, **en ce que** le fournisseur d'énergie (1) reçoit des informations relatives à la condition de charge actuelle des appareils électriques individuels ou des groupes d'appareils et le fonctionnement des appareils individuels n'est interrompu que dans la mesure où il est nécessaire de remédier à l'état critique du réseau.

2. Procédé selon une des revendications précédentes, **caractérisé en ce que** l'utilisateur de l'équipement électrique n'a pas la possibilité d'empêcher le fournisseur d'énergie d'interrompre le fonctionnement.

3. Procédé selon une quelconque des revendications précédentes, **caractérisé en ce que** en cas de baisse de tension, les fournisseurs d'énergie décentralisés sont forcés via une commande de contrôle du fournisseur d'énergie d'alimenter le réseau électrique avec leur énergie stockée.

4. Système pour mettre en œuvre le procédé selon une des revendications précédentes, ayant un fournisseur d'énergie (1), qui fournit de l'électricité aux petits consommateurs, tels que les ménages privés et les petits consommateurs industriels, via un réseau électrique, dans lequel les petits consommateurs se voient attribuer des appareils électriques ou des groupes d'appareils connectés au réseau électrique, dont le fonctionnement peut être commandé via un réseau de lignes de données (9, 12),
**caractérisé en ce que** les appareils électriques ou les groupes d'appareils sont chacun affectés à des modules de commande (8, 13) qui, avec une fonctionnalité d'arrêt, provoquent l'interruption du fonctionnement de l'appareil respectif, dans lequel le fournisseur d'énergie (1) via le réseau de lignes de données (9, 12) a un accès direct à la fonctionnalité d'arrêt des modules de commande (8, 13) et, en cas d'état critique du réseau, envoie une commande de coupure de courant via la ligne de données vers l'appareil ou le groupe d'appareils,
que les modules de commande (8, 13) sont configurés pour provoquer l'arrêt de l'appareil,
que le fournisseur d'énergie (1) est configuré pour recevoir des informations relatives à l'état de charge actuel des appareils électriques individuels ou des groupes d'appareils et
que le fournisseur d'énergie (1) est configuré pour interrompre le fonctionnement des appareils individuels uniquement dans la mesure où il est nécessaire de remédier à l'état critique du réseau.

5. Système selon la revendication 4, **caractérisé en ce que** les appareils électriques d'un petit consommateur sont connectés les uns aux autres dans un réseau maillé (9) de manière à transférer des données.

6. Système selon la revendication 4 ou 5, **caractérisé en ce que** un appareil électrique à l'intérieur du réseau maillé (9) constitue un maître (11), qui communique directement avec le fournisseur d'énergie (1).

7. Système selon une des revendications 4 à 6, **caractérisé par** une mémoire décentralisée (6), qui délivre son énergie stockée dans le réseau électrique sur une commande de contrôle directement adressée du fournisseur d'énergie (1).

8. Système selon une des revendications 4 à 7, **caractérisé en ce que** un affichage de texte est prévu sur les appareils, qui informe l'utilisateur de la durée prévue de la coupure de courant.
